Europäisches Patentamt

European Patent Office

Office européen des brevets

(19)

(11) Publication number: **0 393 525**
**A2**

(12) **EUROPEAN PATENT APPLICATION**

(21) Application number: **90107081.3**

(22) Date of filing: **12.04.90**

(51) Int. Cl.5: **C04B 41/48, C04B 35/22**

(30) Priority: **17.04.89 JP 97223/89**

(43) Date of publication of application:
**24.10.90 Bulletin 90/43**

(84) Designated Contracting States:
**AT BE CH DE FR GB LI**

(71) Applicant: **INAX CORPORATION**
**3-6, Koiehonmachi**
**Tokoname-Shi Aichi(JP)**

(72) Inventor: **Kuno, Hiroaki, c/o Inax Corporation**
**3-6, Koiehonmachi**
**Tokoname-shi, Aichi(JP)**

(74) Representative: **Patentanwälte Grünecker,**
**Kinkeldey, Stockmair & Partner**
**Maximilianstrasse 58**
**D-8000 München 22(DE)**

(54) **Method for manufacturing precolored ceramic products.**

(57) A method for manufacturing precolored ceramic products comprising: a step of impregnating a ceramic sintered material having continuous pores with a liquid dye-containing resin, and a step of hardening the impregnated resin.

FIG. I

# METHOD FOR MANUFACTURING PRECOLORED CERAMIC PRODUCTS

## BACKGROUND OF THE INVENTION

### Field of the Invention

This invention relates to a method for manufacturing precolored ceramic products, and particularly to a method for easily manufacturing precolored ceramic products excellent in the workability, chroma and the like.

Up to the present, as the methods for coloring ceramics, a method of glazing the surface of a ceramic molded object or ceramic sintered material, or a method for mixing a pigment in a powdered raw material for molding have been popular.

Among the above coloring methods, however, the glazing method is advantageous in coloring the surface of ceramic products, but does not allow coloring the inside of the products. For this, portions which are not colored will be exposed on the work surface, so there is a disadvantage that the mechanical work after the glazing cannot be performed.

The method of mixing a pigment in a powdered raw material for molding makes it possible to color even the inside of products, but it has the following defects since the pigment powder is subjected to calcination.

(1) Since there is a limit on the pigments which are available, the kinds of coloring are limited.

(2) The chroma is insufficient, so it is difficult to obtain a vivid and beautiful color.

(3) It is difficult to predict the color tone after the calcination, and a desired color is difficult to obtain.

(4) As the color development may vary depending on the calcination conditions and the like, it is difficult to obtain a same color with good reproducibility.

## SUMMARY OF THE INVENTION

It is an object of this invention to provide a method for manufacturing precolored ceramics, by which even the inside of products can also be colored to a desired color easily and efficiently.

It is another object of this invention to provide a method for manufacturing precolored ceramics, by which colorful ceramic products can be manufactured with good reproducibility.

It is a further object of this invention to provide a method for manufacturing precolored ceramics which are excellent in the strength and toughness, of a good workability, dense, and excellent in the stain resistance.

The method for manufacturing precolored ceramics of this invention is characterized by impregnating a ceramic sintered material having continuous pores with a liquid dye-containing resin and hardening the resin.

In the method of this invention, since the continuous pores of a ceramic sintered material is impregnated with a dye-containing resin and then the resin is hardened, the color of the dye is imparted even to the inside of the ceramic sintered material. Therefore, even if a work such as cutting is performed, the work surface of a same color appears, so it can be worked freely. Also, the imparted color is very vivid owing to the dye, and can be colored to a desired chroma with good reproducibility.

In addition, since the ceramic products are made dense, very strong and tough by impregnating the continuous pores of the ceramic sintered material with a dye-containing resin, the following effects are also produced.

(1) The workability improves, and chippings or crazings due to the work rarely occur.

(2) Permeation of stains becomes difficult to occur, so the stain resistance increases. The work surface is also excellent in the stain resistance.

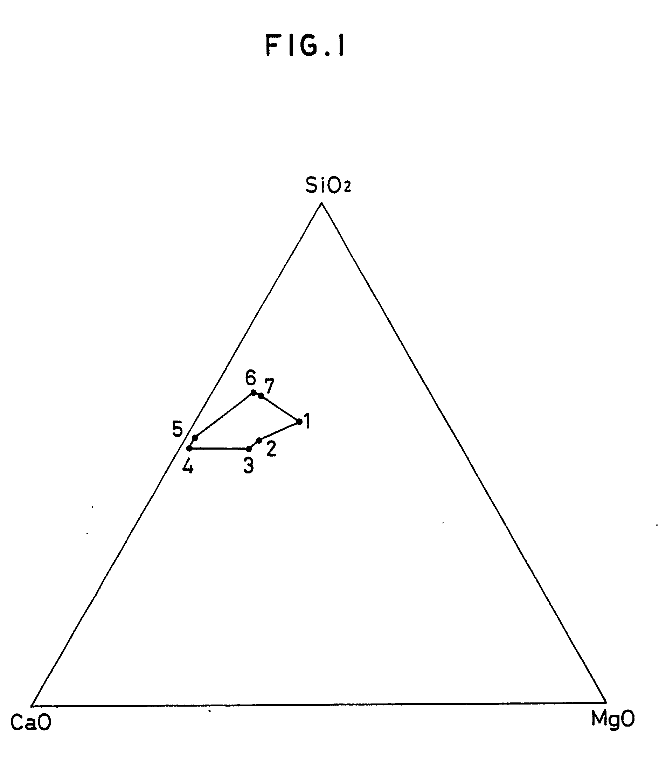

In this invention, particularly when a machinable ceramic sintered material of the composition as shown in Fig. 1 is used as the ceramic sintered material, precolored ceramic products are provided which have a good workability and are very excellent in the strength and toughness.

## BRIEF DESCRIPTION OF THE DRAWING

EP 0 393 525 A2

Fig. 1 is a CaO-SiO₂-MgO₃ component system diagram.

DESCRIPTION OF THE PREFERRED EMBODIMENTS

Now, this invention is described in detail.

Although, in this invention, the ceramic sintered material to be impregnated with a dye-containing resin may be such as having continuous pores which can fully be impregnated with the dye and there is no limit on the composition thereof, a machinable ceramic sintered material is preferably be used since it is excellent in the mechanical properties, particularly in the cutting workability.

As the machinable ceramic sintered material, a ceramic sintered material composed of CaO, $SiO_2$ and MgO surrounded with points 1, 2, 3, 4, 5, 6 and 7 in Fig. 1 is suitable.

The above individual points 1 - 7 in Fig. 1 are the points of the compositions as shown in the following table. .

| (wt.%) | | | |
|---|---|---|---|
| Point | CaO | $SiO_2$ | MgO |
| 1 | 25.7 | 55.5 | 18.8 |
| 2 | 35.4 | 51.6 | 13.0 |
| 3 | 36.5 | 51.3 | 12.2 |
| 4 | 47.4 | 51.6 | 1.0 |
| 5 | 45.9 | 53.1 | 1.0 |
| 6 | 31.2 | 61.7 | 7.1 |
| 7 | 30.2 | 61.5 | 8.3 |
| Fig. 1 | | | |

This ceramic sintered material is compounded so that it is composed of CaO, $SiO_2$ and MgO encircled with the points 1, 2, 3, 4, 5, 6 and 7, and this is calcinated at a temperature over 1200°C and under 1350°C. As the raw materials of CaO and $SiO_2$, natural or artificial $\beta CaO \cdot SiO_2$, for instance, silica lime or Xnotlite can be used, and as the raw material of MgO, talc, dolomite, magnesium hydroxide, magnesium carbonate or magnesium oxide can be used. After these raw materials are sufficiently powdered, mixed and conditioned for the water content to the extent that the needle crystals and plate crystals are not destroyed, they are formed in the mold into the external shape of the valve body, casing and end plate and thereafter are calcinated.

$\beta$-Wollastnite ($\beta CaO \cdot SiO_2$) in the raw material is an aggregate of crystals of the triclinic system which developed in a plate, and has an excellent cutting workability. However, if this $\beta CaO \cdot SiO_2$ is calcinated at a temperature of 1200°C or higher, $\alpha$-Wollastnite of the monoclinic system crystallizes out to harm the cutting properties, so the transition point temperature from $\beta$-Wollastnite to $\alpha$-Wollastnite has been increased by adding MgO, thereby making the cutting properties at higher temperatures good. If the amount of MgO exceeds the above range, the hardness of the sintered material becomes too high and the cutting properties will degrade.

In addition, if it is not required that products have such strength, other ceramics such as ceramic sintered materials of the $CaO \cdot SiO_2$ system which have been sintered at a low temperature may also be used.

In this invention, the porosity of the ceramic sintered material is preferably in the order of 5 to 50% from the aspect of the impregnation performance of the resin, when expressed in water absorption. If the water absorption is less than 5%, a sufficient resin impregnation performance cannot be obtained and the degree of coloration is insufficient. Also, one having a water absorption exceeding 50% is difficult to be manufactured as a sintered material, and the ceramic portion in the product becomes small so that the nature as ceramic can be lost.

In order to impregnate a ceramic sintered material calcinated and formed in a predetermined shape and with a predetermined porosity with a dye-containing resin, it is advantageous if the ceramic sintered material is put in a vacuum device, a liquid dye-containing resin is run into this vacuum device, the ceramic

3

sintered material is impregnated with the resin within the vacuum device, and the resin is hardened according to the hardening conditions of the resin. In this invention, as the resin, for instance, acrylic resins such as polymethyl methacrylate (PMMA) or silicone resins can suitably be used.

As the dye, various publickly known ones can be used. These dyes are preferably a fine powder the moleuclar size of which is not larger than submicron for uniform dispersion into the resin.

In this invention, the compound ratio of these dyes and the resin may be determined appropriately in accordance with the coloring value of the dyes, the target color tone or the like.

By impregnating the inside of the ceramic sintered material with a resin and hardening the resin in this way, the pores formed in the ceramic sintered material are filled with the resin, whereby the ceramic sintered material is given the coloring by the dye contained in the resin and the characteristics such as strength and toughness are increased.

Particularly, if an acrylic resin such as PMMA is used, the pores in the ceramic sintered material are filled up and become dense, thereby achieving an effect that no stain soaks thereinto. If a silicone resin is used, the rate of filling pores is not so high, but the stain resistance is also improved by the repellency thereof.

After such impregnation and hardening of the resin, it can be finished into products of a desired shape using a machine tool such as a lathe. Since. the ceramic sintered material obtained by this invention has a good cutting workability due to the increase of the strength and toughness by the resin impregnation; works such as perforation and fluting can be done freely without producing crazing or breaking, thereby providing a work surface which is of a high precision and colored to a same color. After the work, the surface polishing is preferably applied to finish the products.

As detailed above, in accordance with the method for manufacturing precolored ceramic products of this invention, colorful ceramic products can be manufactured with good reproducibility, and in addition the following excellent effects are produced so that this method has much industrial advantages.

(1) The inside is also provided with a coloration similar to the surface.

(2) From (1), a similar colored surface appears on the work surface.

(3) Products excellent in the strength and toughness are provided.

(4) From (3), the workability improves.

(5) Products which are dense and excellent in the stain resistance are provided. They are also excellent in the stain resistance of the work surface.

Precolored ceramic products obtained by the method of this invention are very useful as stamps, valves, buttons, accessaries and other various precolored members.

This invention is explained more specifically by giving the embodiment below.

100 parts by weight of Xonotlite and 10 parts by weight of talc (CaO: 44 wt.%, $SiO_2$: 53 wt.%, MgO: 3 wt.%) were dry mixed for 5 minutes in an Eirich mixer, added with 16 wt.% of water in outer percentage and left to stand for 24 hours in a sealed state for adjusting the water content, and the thereby obtained raw mixture was placed in a molding die and molded under 450 kgf/cm², and the obtained molded object was dried for 24 hours at 80°C and thereafter calcinated. The calcination was performed for 60 minutes at 1250°C after heat-up from the room temperature to 1250°C at a rate of 10°C/min., and thereafter left to cool within the electric furnace and the temperature thereof was lowered to the room temperature.

The sintered material thus obtained had a composition of $\beta$-Wollastnite ($\beta CaO \cdot SiO_2$) in which Mg was solidly dissolved, and the water absorption was 10.3% and the cutting workability was extremely good. The bending strength was 500 kgf/cm².

This sintered material was sealed in a vacuum device, a dye-containing resin is run into the vacuum device, the sintered material was impregnated with the resin in the vacuum device, and then the resin was hardened. This resin-impregnated machinable ceramic sintered material had substantially zero water absorption and air permeability, and it was recognized that the susceptibility to water and air permiability had been lost. Also, its strength had been greatly increased. Further, when this resin-impregnated machinable ceramic sintered material was subjected to a cutting work, it was confirmed that the work surface had also been given a vivid coloring similarly to the surface.

## Claims

1. A method for manufacturing precolored ceramic products comprising: a step of impregnating a ceramic sintered material having continuous pores with a liquid dye-containing resin, and a step of hardening the impregnated resin.

2. A method of claim 1 wherein the ceramic sintered material having continuous pores is a porous material having a water absorption of 5 to 50%.

3. A method of claim 1 wherein the ceramic sintered material having continuous pores is placed in a vacuum device, and after evacuating the vacuum device, a liquid resin is supplied into the vacuum device to cause the sintered material to be impregnated with the resin.

4. A method of claim 1 wherein the resin is an acrylic resin or silicone resin.

# FIG.1